# EUROPEAN PATENT APPLICATION

(11) **EP 3 936 658 A1**
(43) Date of publication of application: **12.01.2022**
(21) Application number: 20184335.6
(22) Date of filing: 06.07.2020
(51) Int. Cl.: D06N 3/00, D06N 3/14, A41D 19/00, A41D 31/102, A41D 31/12, A43B 7/12, B01D 67/00, B29C 67/20, B01D 39/16

(54) **3-DIMENSIONAL MANUFACTURE OF POROUS AND WATERPROOF MEMBRANE**

(71) Applicant: Dimpora AG, 8050 Zürich (CH)
(72) Inventor: Beltzung, Anna Margot, 8049 Zürich (CH); Stucki, Mario, 8050 Zürich (CH); Menand, Lucile, 8057 Zürich (CH)
(74) Representative: Grimm, Siegfried

(57) **Abstract**

The invention relates to a seamless manufacturing processes for 3-dimensional waterproof and breathable porous polymer membranes by spraying, dip-coating or painting a substrate with a dispersion comprising polymer, coated or non-coated particles and diluent and removing the particles by dissolution thus creating porosity after the 3D coating/shaping. The invention further relates to dispersions to obtain such membranes, to polymer membranes obtained, to shaped articles containing such membranes; to the use of such membranes, shaped articles and intermediates.

## Description

The invention relates to manufacturing processes for 3-dimensionally shaped microporous, waterproof and breathable polymer membranes; to intermediates suitable to obtain such membranes; to polymer membranes as described herein; their seamless application on different substrates, more particularly on textile products; to textiles containing such membranes and to the use of such membranes, textiles and intermediates.

Membranes are known per se, they separate compartments. In clothing, rain and weather is kept outside while sweat should move through the membrane to the outside.

Current porous membrane systems in clothing are produced in a 2-dimensional (2D) way, by means of stretching e.g. Gore-Tex ^{®}, eVent ^{®}, Xpore ^{®}) or phase inversion (Porelle ^{®}). This way, no solutions were found to manufacture a truly 100% seamless microporous membrane. Instead, constructing a "3-dimensional (3D)" object, such as a textile product, out of membrane requires the use of stitching, gluing, welding, bonding and/or pressing. Those boundaries are the first source of failures in a textile product and usually requires additional steps to provide full performance and a certain stability, i.e. seam taping in the case of stitching. Accordingly, the present invention addresses this drawback.

Additionally, the manufacturing of textile products using known 2D technology results in significant waste. In embodiments, the present invention addresses this drawback.

Still further, choice of polymer in the manufacturing process of such 3D microporous membranes will also define its environmental impact. There is a need for materials that can be disposed of after use by non-hazardous incineration. The present inventors identified a particular need for materials useful in partially or fully biodegradable clothing or that can be easily recycled at the usual high protection performance. For example, Fluorine containing hydrocarbons are extremely persistent and therewith considered a threat to nature.

WO2017/097778 discloses waterproof and breathable, porous membranes and its manufacturing. The manufacturing method disclosed in that document relates to 2D microporous membranes only.

EP1212953 discloses a waterproof, water vapour permeable shoe comprising an upper, a functional layer in the shape of a sock, a lining, and a sole. The manufacturing thereof still requires the use of sewing to secure the functional layer on the top opening. The sole may also be secured to the bottom of the shoe by bonding or sewing, and the seam re-sealed by a further application of waterproof water vapour permeable polymer or, to avoid further sealing, the sole may be injection moulded. The process is therefore complexified. Also, to adapt the size of the shoe, the functional layer may be adapted by making a cut in the bottom of the layer and bonding the edges together. These shoes disclosed in that document are therefore not fully seamless.

WO2017031432 discloses waterproof, breathable garments and its methods of production. The garments may include a laminate of a seamless ePTFE membrane and at least one textile. The seamless membrane may shrink or be stretched to fit multiple sizes of garments. To bond the textile to the membrane, there is the need to use a continuous breathable adhesive or a discontinuous adhesive.

WO2017027826 discloses waterproof, breathable socks, booties, shoe inserts, and footwear assemblies containing the shoe inserts. The booties and shoe inserts may include a laminate comprising a seamless extensible film, such as a polyurethane film, and at least one textile. Again, to bond the textile to the membrane, there is the need to use a continuous breathable adhesive or a discontinuous adhesive.

WO2014167288 discloses a method of manufacturing a breathable waterproof garment. The method comprises: forming a first garment layer in a stretched configuration over an oversized three-dimensional garment former; covering the first garment layer with an intermediate garment layer resistant to penetration by liquid water but permeable to water vapour; covering the intermediate garment layer with a second garment layer. The non-porous functional layer is adhering to the first and second garment layers at a plurality of discrete securement locations.

Therefore, there is a need to provide additional / improved manufacturing processes for seamless three-dimensional porous polymer membranes which can be applied to a wide variety of applications, including designs but also materials used (wide variety of polymers including durable solutions) and/or support materials. There is also a need for new three-dimensional polymer membranes to have beneficial properties especially in terms of water vapor permeability. Another point to improve is the use of adhesives in between the fabric and the 3D-shaped functional membrane e.g. socks, glove etc.) in terms of construction and performance but also more specifically the glue and its environmental impact in downstream processes such as recycling or (bio) degradation.

The invention will be described in further detail below, referring to the following specific aspects thereof:
- **1st aspect:**: Manufacturing 3D microporous membrane
- **2nd aspect:**: Intermediates suitable for 1st aspect
- **3rd aspect:**: 3D seamless membrane
- **4th aspect:**: Special application for textile

Unless otherwise stated, the following **definitions** shall apply in this specification:
Polymer: The term "polymer" is known in the field. The term refers to a material of repeating structural units ("monomers"), particularly to synthetic polymers (comprising synthetic monomers). The term thus includes homo-polymers, co-polymers and blends thereof. The term further includes oligomers. Polymers may be cross-linked.
Particle/Template/filler: The term "particle" is known in the field and includes crystalline or amorphous materials. The term includes uncoated particles and coated particles as well as treated particles and untreated particles Further, in the context of this invention, particles are also referred to as "filler", thereby indicating its purpose. In this work, "particles" can also be referred to as "template" as it is removed to obtain the final product.
   It is known that particles may agglomerate. In the context of the present invention, suitable particles have a diameter in the submicron size range, whereby particle sizes are preferably between 5 - 15'000 nm, such as 2000 - 8'000 nm.
   Suitable particles may be obtained from a range of preparation methods, including high temperature-gas phase processes (such as flame synthesis, laser processes and plasma processes), and liquid phase chemical methods (such as precipitation and sol-gel processes), and milling of particles. Particles particularly suitable in the context of the present invention may be obtained by a precipitation process or by milling of naturally occurring materials.
Salt: The term "salt" is known in the field. A salt is defined as the product formed from the neutralisation reaction of acids and bases. Salts are ionic compounds composed of cations and anions so that the product is electrically neutral. Examples of salt classes are halogenides (chlorides, fluorides, bromides, iodides), sulphates, phosphates, carbonates, nitrates, particularly phosphates, carbonates and halogenides. In inorganic salts, the cation is a metal ion and the anion is a non-metal ion; specific examples of inorganic salts include calciumphosphate, calciumcarbonate, magnesiumsulfate, sodiumchloride, ammonium chloride and ammonium carbonate. In the context of the present invention, metal oxides (i.e. a product formed by oxidation of a metal) are not considered salts. In organic salts, the cation or the anion is an organic ion; examples of organic salts may be selected from the group consisting of alkyl-ammonium salts, and metal carboxylates.
Viscosity: The "viscosity" of a fluid is the measurement of resistance of mixing at a given stirring speed. The more viscous the fluid, the harder to move through. In more details, this measurement describes the internal friction of a moving fluid and determines the energy required to make it flow.
   The viscosity is measured with a HAAKE ViscoTester iQ. A rotating cylinder is immersed in the fluid (18.5 g) and the resistance of the fluid is measured. Several parameters influence this result such as the temperature of the fluid or the shear velocity of the cylinder. In order to have an idea of a fluid's behaviour, the norm is often to have a plot of the viscosity as a function of the shear velocity for a given temperature.
   Porosity: The "porosity" of a material as described herein is the volumetric percentage of pores of the total material. Porosity can be determined by porosimetry, by measuring the apparent material density, BET analysis or by microscope images.
Pore size: The "pore size" of a material as described herein is the middle size of the pore size distribution throughout the membranes. A particularly suitable method in the context of this invention is the optical analysis of the membranes' surface thereby providing information on pore mouth size.
Permeability: The "permeability" of a material as described herein is defined as the flux of a fluid (i.e. a liquid medium or a gaseous medium) through interconnected pores of the material. Permeability can be determined by measuring the liquid or gas volume which passes a defined membrane area in a defined time at an applied pressure.
   i) For gaseous medium, the Water vapor transmission rate (WVTR) is a suitable parameter to determine permeability also referred to as "breathability" in this work. WVTR is measured according to the ASTM Standard E96 B in gram per square meter and day (g / (m² d)). This method, also known as upright cup method with water, consisted of a cup with water that is covered by the test specimen. The prepared sample was weighed before it was placed in an oven, which controlled temperature (23°C), relative humidity (50% RH) and ventilation (1 m/s). Alternative measures are covered in standards ASTM E96 BW for the inverted cup, or ISO 11092 for the sweating hot plate method. The Desiccant method of the upright cup test is also described in the ASTM E96 standard.
   ii) For liquid medium, the waterproofing is a relevant parameter. In determining water proofing, the relevant driving force is pressure. The water column (WC) in meter (m) is determined in compliance with ISO 811. Briefly, water was pressed onto the sample at constant pressure increase (600 mmWC per minute) over time. The dry side of the sample is observed optically and the third penetrating water droplet is defined as the breakthrough of the sample and the pressure represents the water column (WC).
   iii) Windproofing: The air flow throughout a structure is characterized by the volume of air moving through a defined area of the structure at a certain applied pressure over time (cm3/cm2/min, or cm3/feet/min, abbreviated "cfm"). A suitable measurement is described in Standards ISO 9237 or ASTM D737. If a material or substrate shows no apparent movement of air throughout the structure the specimen is regarded as windproof.
Seamless: A "seamless" membrane is defined as a 3D shaped (x,y,z coordinates) uninterrupted membrane, i.e. without visible seams and/or cut as well as attachment or connection (gluing, pressing and similar artefacts) of two or multiple initially separated pieces or sides of membranes. As there is no seam, there is also no seam-tape on the final object containing such membrane. The seamless phase must be continuous throughout the object apart from the "practical" opening, that provides access to the enclosed void, for example the hole for the insertion of a foot in a sock or a hand in a glove. Optionally, the extremities of the "practical" opening is free of seam-tape as this is where the membrane phase stops and can be attached to the final object, i.e. a shoe construction by gluing, pressing and similar artefact.
3-Dimensional and 2-Dimensional: These geometric settings are known and used in the usual context as spatial structure and flat structure respectively. Accordingly, a 3D structure is described herein as a non-flat structure, thus excluding flat structures (2D structures). For the avoidance of doubt, a 2D structure that is bent, e.g. to a cylinder, is still considered 2D. 3D objects comprise three (3) distinctive coordinates e.g. y, z and x. More specifically, 3D membranes may adapt to the form of an object that can be flexible or rigid. In the context of this invention, a 3D substrate can take the shape of the human body or parts of, such as hand, feet etc., or be a tailored finished textile product. A 3D membrane is therefore a membrane that was created with a continuous phase onto those 3D substrates. It can be removed or stay on the substrate depending on the final application.
Body-mapping: A body-mapping is described herein as a feature where different performance levels and/or colors of a membrane can be deliberately placed at specific areas on the human body to maximise the use of the membrane. For example, a jacket, which shows more waterproofness and less breathability on the shoulders but more breathability and less waterproofness on the back or armpits. It can also be adapted at the wish of the individual intending to use this jacket.

In general terms, the present invention relates in a **first aspect** to a method of manufacturing a 3D, seamless, porous polymer membrane (4) having a pore size of 5 nm - 10'000 nm. Said method comprising the following subsequent process steps (a) to (g):
**step (a):** manufacture of a liquid membrane dispersion (1) by a milling process uniting polymer matrix (5), coated or uncoated particles (6), solvent (7) and optionally one or more additives (8) dissolved therein and optionally one or more dyes (9).
**step (b):** 3D application, e.g. spraying, dip-coating, painting, printing, 3D printing on a substrate, of the liquid membrane dispersion (1) directly on a substrate (2.2). Optionally, the substrate (2.2) can be chemically, physically or thermally pre-treated or, electrically charged, to facilitate the homogeneous application of the liquid membrane dispersion (1). Optionally, in the case the substrate (2.2) is a finished textile product, a specific attachment structure, such as a mannequin, a shape-changing mannequin or an inflatable mannequin, can be used to control the shape, condition and positioning of the substrate.
**step (c):** drying step of the wet layer and the substrate resulting in a non-porous multiphase (polymer, template and potentially coating) dried film (2.1) on a substrate (2.2), thus forming one single object (2).
optional repetition of step b and c: Optionally multiple repetitions of the steps b and c can be applied in subsequent order. When following such protocol, a multi-layered membrane is obtainable. Such repeating is referred to as **step (d)**
**step (e):** optionally adding a polymerization or a cross-linking step.
**step (f):** removing said particles (6) from said film (2.1) by contacting the single object (2) containing the non-porous polymer film (2.1) and the substrate (2.2) with an aqueous composition (10) to thereby obtain the porous polymer membrane (3.1) together with the substrate after washing step (3.1). The final product (3) after step (d) is therefore the 3D microporous membrane (3.1) and the substrate (3.2).
**step (g):** optionally, the 3D microporous membrane (3.1) can be removed from the support (3.2), thus resulting in a so-called "free-standing membrane" or "self-supporting structure" (4).

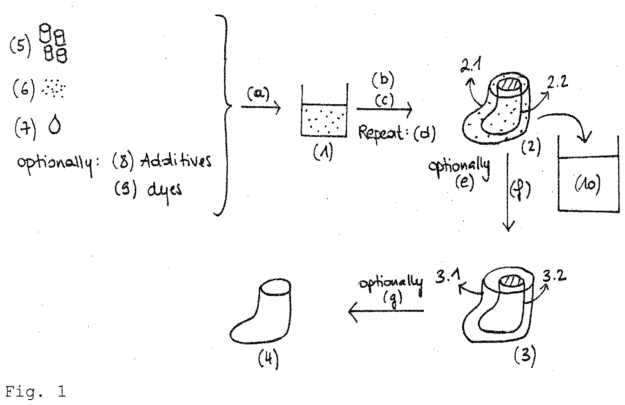

This process is illustrated in fig. 1 and explained in further detail below. As will become apparent when considering this specification, this invention provides for a number of benefits:
**First,** a 3D application of a protective polymer layer is useful for any already shaped objects, as there is no need of changing the initial process of manufacture, simply by adding the membrane by spraying, dipping, coating or painting the polymer dispersion. By creation of the porous system after shaping the membranes the herein described process gives access to beneficial performance in multiple aspects. Adding the performance of a membrane to this polymer layer brings added values, for example regarding weather protection and regulating humidity. Finally, microporosity brings an even more advantage regarding breathability features, thanks to the open and porous structure. None of the existing 3D applications solutions can bring that level of performance while staying seamless, thus permitting a new freedom of design for functional 3D shaped articles.
**Second,** a 3D application of present microporous membrane brings a significant improvement regarding waste material and avoids loss of performance. An example of this is its use on a finished textile product; normally, the membrane would have been present on the initial laminate prior to construction/tailoring of the object. Thus, all the cuts necessary during production are membrane waste. This is avoided according to the present invention. Moreover, stitching the laminate creates holes in the membrane, which subsequently need to be covered by seam taping in order to provide the required waterproofing. This process is famously tedious, time-consuming, expensive and blocks breathability (tapes are not functional / breathable) . With this invention, the seam is directly covered with a 3D microporous membrane and preserves the breathability in the presence of seams.
**Third,** the present invention enables manufacturing of halogen-free, 3D microporous membranes. This is considered particularly an advantage over known membranes for clothing.
**Fourth,** 3D microporous membrane's performances can be further enhanced by several parameters involving the initial chemical recipe of such membrane dispersion published in WO2017097778A1. The following parameters can play a role in the final design and performance of the object: thickness (single to multiple layers possible), hierarchical pore structure (amount and size of pores), mapping with different localized performance (bodymapping of an outdoor jacket for example) along with optical representation in coloring or shaping etc. said area to make it distinguishable etc.

In one embodiment, the membrane is 3-dimensional (3D) and seamless and attached to a substrate. In a further embodiment, the membrane is 3-dimensional (3D) and seamless and free-standing (4).

The pore size of the membrane may vary over a broad range. Suitable is a pore size of 5-10'000 nm, preferably 100 - 5000, most preferably 300-1000 nm. Preferably, the poresize distribution is unimodal. Pore size may be influenced by the choice of particle size.

In one embodiment, the suitable starting materials for step (a) comply with the following physical parameters:
(i) Solid content:
   a. from 40 to 99 wt.-% diluents;
   b. from 1 to 20 wt.-% polymers;
   c. from 0.5 to 40 wt.-% coated or uncoated particles;
   d. from 0 to 6 wt.-%, preferably 2-4 wt.-% coating material
   e. from 0 to 5 wt.-% additives.
   f. from 0 to 5 wt.-% dyes.
ii) Particle sizes: 5 - 15'000 nm, preferably 2000-8000 nm
iii) Polymer/filler - weight ratio: 10/90-90/10, preferably 50/50 - 20/80
iv) Viscosity: 50 - 2000 mPas, preferably 100-800 mPas at 25°C and 200 rpm

In a further embodiment, the inventive 3D membranes (3), (4) comply with the following parameters:
i) Pore size: 5-10'000 nm, preferable 100 - 5000, most preferably 300-1000 nm
ii) Porosity: 30-80%, preferably 55-65%
iii) Thickness: 0.01 - 1000 microns, preferably 1 - 120 microns, most preferably 15-50 microns
iv) Waterproofness (ISO 811): > 4.8 m
v) Contact angle: > 50°
vi) Breathability (ASTM E96 B): > 500 g/m2/day
vii) Amount of layers: 1-20, preferably 1-4.

### Additional details on the process:

**Step (a)** may be divided in to sub-steps, namely preparing coated particles (a1) and preparing the solution prior to milling (a2):
step (a1): In one embodiment, suitable manufacturing methods for coated particles (6) are known per se, and include mixing, ball milling or pug milling of the respective starting materials (uncoated particles and coating materials), optionally in the presence of an inert diluent. In a further embodiment, non-coated particles are not pre-manufactured but are chosen to fit the same size requirements, i.e. in the range of 5 - 15'000 nm, preferably 2000-8000 nm.
step (a2): In an embodiment, suitable manufacturing methods for dispersions (1) are known per se, and include preparing a solution of one or more polymers , one or more solvent, optionally additives (8) and dyes (9) and combining this solution with the one or more coated particles of step (a1) and/or non-coated particles (6). A strong stirring/milling step creates the final membrane dispersion (1). The solvent (7) is selected to ensure dissolution of the polymer (5) without dissolving the particles (6) . Alternatively, a polymer/solvent mixture can be bought readily from suppliers.

In a further embodiment, the following section describes suitable candidates for each of the raw materials:
*Suitable solvents* (7) may be selected from a broad range of known solvents and combinations thereof. Preferred are solvents with a b.p. below 200°C. Examples of solvents include water or organic solvents selected from the group consisting of alcoholes, ethers, ketones, esters, halogen-alkanes, alkanes, cycloalkanes, sulfoxides, amides, pyrrolidones, lactames.
*Suitable polymers* (5) may be selected from a broad range of known polymers and combinations thereof and also includes polymers that may be cross-linked, oligomers that may be polymerized. The invention also includes the use of co-polymers, such as rubbers, and mixtures of polymers ("blends"). Further, the polymers are selected from the group of soluble polymers. In the context of the present invention, a polymer is considered a soluble polymer in case 1 g of polymer dissolves in one litre of organic solvent or one litre of water and where the thus obtained solution follows the standard behaviour of polymer solutions (such as viscosity as a function of concentration and temperature; change in the solvent's vapour pressure, transparency of the solution). Typically, such soluble polymers show little or no cross-linking. Such polymers are known to the skilled person and may be readily identified. Soluble polymers may be selected from the group consisting of polyurethanes, ethyl-vinylacetates, polycarbonates, artificial rubbers, polyesters, polyether, polyaryletherketones, polyamides, polyacrylates, polyarylates, polystyrenes, cyclo-olefin-copolymers and polyolefins.
   In embodiments, the polymers are selected from the group of pre-polymers, which are cross-linked in a subsequent step. Cross-linked polymers are typically not soluble, while the corresponding starting materials are. Again, such polymers are known to the skilled person and may be readily identified. Cross-linked polymers may be selected from the group consisting of natural and artificial rubbers, polysiloxanes, epoxide resins and specially modified, cross linkable forms of the polymers mentioned above.
   In embodiments, the polymers are selected from the group of pre-polymers, which are polymerized in a subsequent step. Such polymers may or may not be soluble, depending on the molecular structure. Suitable pre-polymers that are polymerized may be selected from the group of polyesters and polyamides where the corresponding starting materials are lactones and lactames respectively and from polyurethanes, where diisocyanates and dioles or/and amines are the respective starting materials.
   Particularly preferred polymers according to this invention are selected from the group of polysulfones, polyethersulfones, polycarbonates, polystyrenes, polyacrylates, poly-ysiloxanes, polyarylates, polyurethanes, ethyl-vinylacetates, artificial and natural rubbers, polyesters, polyether, polyaryletherketones, polyamides, cyclo-olefin-copolymers and polyolefins.
*Suitable coated or non-coated particles* (6) may have a particle size of 5- 15000 nm, preferably 2000 - 8000 nm. Suitable materials for said particles may be selected from a broad range of known template materials, including inorganic pore templates selected from the group of crystalline organic compounds, metal salts, and metal oxides, as well as organic pore templates selected from the group of organic salts, and combinations thereof. Preferably, the metal salt particles are selected from the group consisting of Carbonates (including Hydrogencarbonates), Sulphates, Halogenides, Nitrates and Phosphates, preferably Carbonates. Examples of metal salts include MgCO₃, CaCO₃, SrCO₃, BaCO₃, Na₂CO₃, K₂CO₃, NaCl. Examples of metal oxides include ZnO and MgO. Preferably the crystalline organic compounds are selected from the group consisting of saccharide such as glucose and fructose or a combination of both. Preferably, the organic salt particles are selected from the group consisting of solid alkyl-ammonium compounds and alkali-metal carboxylates. Examples of organic salts include tetramethylammonium chloride and sodium citrate. The pore templates may be obtained from known synthetic processes, such as a wet process or a dry process, or may be obtained from naturally occurring sources.
*Suitable coating materials* for said particles may be selected from surface functionalizing reagents known to the skilled person.
   Suitable coating materials for said particles may be selected from anhydride acids, such as poly maleic anhydride acids (PMAH), its homopolymer but also co-polymer containing PMAH) and mixture of PMAH, or carboxylic acids, such as C₆₋₃₄ carboxylic acids, and mixtures of carboxylic acids. In the context of this invention, PMAH may be linear or branched. Further, the co-polymer containing PMAH also contains other functional groups such as alkane, alkene functional groups. In the context of this invention, carboxylic acids may be linear or branched. Further, carbocyclic acids may contain one or more double bonds. The term carboxylic acid further includes mono-carboxylic acids and di-carboxylic acids. Suitable carboxylic acids are selected from the group of naturally occurring fatty acids, such as stearic acid, and naturally occurring dicarboxylic acids, such as pimelic acid sebacic acid.

They may further be selected from the group of alkyl-aryl-alkoxy-silanes, aryl-alkoxy-silanes, alkyl-alkoxy-silanes, and mixtures of such silanes. In the context of this invention, these silanes may be selected from the group of trialkoxy-silane derivatives, dialkoxy-silane derivatives and monoalkoxy-silane derivatives. Further, these silane derivatives may be cyclic or linear and thus include corresponding oligomers. Suitable silanes are selected from the group of ((C₂₋₁₆)alkyl)Si(OMe)₃, ((C₂₋₁₆)alkyl)Si(OEt)₃, ((C₂₋₁₆)alkyl)₂-Si(OMe)₂, ((C₂₋₁₆) alkyl)₂Si(OEt)₂ and corresponding, optionally substituted phenyl group containing derivatives, such as (C₂₋₁₆)alkyl)-Ph-Si(OMe)₂. For aryl-silanes, one or more of the above alkyl group is replaced by at least one phenyl or substituted phenyl group.

*Suitable additives* may be selected from a broad range of known additives and mixtures thereof and are known in the field. The term additives includes thickener-, curing-, leveling-, film flow-, film uniformity-, anti-foaming-, anti-orange peel- and wetting- agents. Such additives are commercially available, e.g. from Byk Additives and Instruments, Evonik Industries, CRODA International.

*Suitable dyes* may be selected from a broad range of known dyes in the field. Preferably, sustainable dyes from natural sources such as plants, invertebrates or minerals.

*Suitable dispersions* may be prepared from the above starting materials using known techniques. It was found suitable to combine the starting materials by vigorously stirring the components and/or subjecting the components to ultrasonic treatment and/or subjecting the mixture to a ball milling step. The dispersion may be kept at elevated temperature, e.g. 40-100°C. Such temperatures increase polymer solubility, reduce viscosity and facilitate the method described herein. In the case where a more viscous dispersion is preferred, i.e. for spraying, the temperature will be kept at room temperature (18-28°C). Preferably, the viscosity is in the range of 50 - 1000 mPas, preferably 200 - 600 mPas.
**Step (b):** In one embodiment, this step is the application of the liquid membrane dispersion (1) of step (a) on a three-dimensional substrate. This substrate can either be a rigid or a flexible object. The method of application can vary from spraying, dip-coating, printing or painting. The substrate, if not standing, is placed on a standing support to facilitate the 3D application. Additionally, the substrate is usually pre-heated before the liquid membrane dispersion (1) is applied.
**Step (c):** in an embodiment, for faster solvent evaporation, the shaped wet coated substrate is subjected to a heat treatment (e.g. drying). The temperatures and treatment times may vary, depending on the starting materials (particularly the solvent (7)) and are typically between 25-200°C and preferably below the melting point of the polymer of the membrane and the support. This heat treatment can occur from the outside of the film (e.g. oven with or without ventilation, heat gun, etc.) or from the inside (e.g. heated inflatable structure). The typical drying time is between 10 seconds and 2 hours, preferably between 30 seconds and 10 minutes, most preferably between 1 depending on the final desired results of membrane (i.e. thickness, performance, etc.).
**Step (d):** step (b) and (c) can be repeated as many times as necessary (usually below 4 times) depending on the final desired results of the membrane (i.e. thickness, performance, etc.).
**Step (e)** In a further embodiment, the obtained material is optionally subjected to a polymerisation or a cross-linking step.
**Step (f):** In an embodiment, the removal of template particles occurs for the non-porous 3D film (2.1) but this washing is made with the said film attached to the substrate (2.2). Optionally, the non-porous 3D film (2.1) can be removed/peeled off from the substrate (2.2) prior to the washing step (step (f)), especially for "simple" structure. The material to wash (10) is selected to ensure dissolution of the coated particles without dissolving the polymer. Suitable materials (10) for this washing step are particularly aqueous solvents, such as water or acidic aqueous solutions (e.g. formic acid, acetic acid or hydrochloric acid). The choice of solvent particularly depends on the type of template material (metal salt / metal oxide) used. After complete removal of the template, the object (3) is then washed again with water to remove any residual washing materials, i.e. acids, and finally dried at room temperature or using a drying/heating device to accelerate the process.
   Suitable washing materials (10) may be prepared from water, acidic aqueous solution, described by a pH below 7 containing for example formic acid, acetic acid, citric acid, hydrochloric acid, basic aqueous solution containing, described by a pH above 7, containing for example sodium hydroxide, potassium hydroxide.
**Step (g):** In a further embodiment, the 3D microporous membrane (3.1) can optionally be removed from the 3D support (3.2) after the washing step (f) while keeping the 3D shape of the support. The membrane at this step is soft and elastic enough such that a smooth removal is possible. The obtained membrane (4) is seamless, has no holes and thus results in a so-called "free-standing membrane" or "self-supporting structure". It can afterwards be attached to an already finished product from a similar shape, most probably, but not limited to, between two layers of a finished textile product for example. No seam tapes would be necessary.

In a further embodiment, the manufacturing of the inventive membrane does not include a "closing" step, such as bonding, sewing, welding, gluing, knitting, stitching, that is detectable in the end product.

In a further embodiment, the production of the inventive membrane does not involve a phase separation.

In a further embodiment, the porosity of the inventive membrane is only introduced after the application of the liquid membrane precursor (1) onto the substrate, hence after the assembly into a 3D shaped product. This dissolution step (f) is performed in 90 minutes or less.

In a further embodiment, the coating step (b) is selected from the group consisting of spraying, painting, printing (including 3D printing), and dip-coating;

In general terms, the present invention relates in a **second aspect** to the use and nature of a substrate (2.1) to obtain the 3D microporous membrane (3) or (4), thus obtaining a so-called "seamless membrane".

### i. Types of Substrate: material, shape

*Suitable substrates* (2.1) in terms of **materials** may be selected from a broad range of known substrates. The substrate may be any support compatible with the manufacturing process; particularly, it needs to be inert towards the solvents, especially for step (g) to be possible. For specific cases, it is further beneficial, if the coating adheres to the substrate during manufacturing and can be removed after manufacturing. In specific cases, where the final product involves membrane and substrate (i.e. no step (g)), the bond between the membrane and the substrate is strong and difficult to remove.
In one embodiment, suitable materials for a substrate include polymer materials, leather, silicones, glasses, metals (such as aluminium), ceramics, concrete, cement, wood, and paper (in each case coated or uncoated).
In the case of textile manufacturing it can be advantageous to directly coat the here described dispersions (1) onto a tightly woven, knitted or non-woven fabric. In this embodiment, it is advantageous if the membrane polymer adheres well to the type of polymer or biopolymer used in the textile substrate. Potential additives (8) in the dispersion but also in or on the substrates surface can improve the required adhesion.
For outdoor clothing, suitable substrates are tightly woven polyamides or polyesters or polypropylenes. This invention is particularly advantageous if the dispersion is directly applied onto a finished textile product to cover the seam with the membrane. The membrane can be placed on the inside or the outside of the textile product. The membrane can further be covered by additional layers of membranes with different characteristics or with a layer of fabric. In one embodiment, the substrate or textile product may be kept at elevated temperature, e.g. 40-100°C. Such temperatures help to evaporate the solvent faster and facilitate the method described herein. In another embodiment, the textile product should be placed on a mannequin, e.g. inflatable, to facilitate the method described herein.

*Suitable substrates* (2.1) in terms of **shapes** may be selected in one embodiment from a broad range of known shaped substrates, such as hand (glove), feet (sock), torso (pull-over), leg (stockings), head (cap) or any types of clothing in general. Additionally, any type of shaped leather and textile objects can be coated with the liquid membrane dispersion (1). Additionally, this technology enables the production of complex 3D geometries (design, style); the application of the liquid membrane precursor (1) adapts to the shape of the substrate, i.e. special pattern will be covered by the membrane thus creating complex geometries with waterproofing and breathable properties.

### ii. Direct-to substrate: no removal step

The final product is achieved after step (f) . The final membrane is positioned on the substrate with a certain adhesion to provide a protective layer, which is breathable and waterproof. This membrane is broadly applicable. For examples, it is suitable in all application where it replaces 2-D membranes, such as, but not limited to, textile products.

### iii. Self-supporting structure: use of mannequin with removal step

step (e): If required, the porous film (3.1) can be removed from the substrate (2.2), e.g. by peeling off or by transfer to another substrate as a multilayer material. This removal step takes place after, or optionally prior to, the washing step (f). Step (g) may be performed using processes known per se. The removal step (g), aims to remove substrate (2.2) to obtain an unsupported, seamless, porous polymer membrane (4) e.g. in the shape of gloves or socks.

This free-standing and 3-dimensional shaped membrane is then transferred to another shaped support material to achieve a finished textile product, e.g. gloves or socks equipped with the inventive membrane. Again, this membrane (4) is suitable in all application where it replaces 2-D membranes, such as, but not limited to, textile products.

### iv. manufacturing

The manufacturing process described provides porous materials limited in size by the substrate. Single piece manufacturing process can be achieved by in line assembling using spraying robots or printing on surfaces or 3D printing on surface or free standing or in line mannequin begin dip coated in the dispersion like for the production of laboratory gloves.

The present invention relates in a **third aspect** to novel 3 dimensional polymer membranes. This aspect, particularly advantageous polymers, characteristics of the inventive membranes and examples are outlined below.

**Membrane:** In one embodiment, the invention relates to a seamless polymer membrane, said membrane has a thickness and / or a porosity; and / or a pore size; and / or tensile properties and / or a water column; and / or a water vapour transmission rate; and / or a water contact angle; and / or air permeability and / or a 3 dimensional shape enclosing a structure without seams, cuts, bondings or similar assembly artefacts as described above, first aspect of the invention. Due to the unique manufacturing process, as outlined herein, the present invention provides porous membranes (or even nanoporous membranes) combining specific properties in the 3 dimensional shapes of polymer membranes. It is considered advantageous that such shaped membranes are free of seams, cuts, bondings or similar assembly artefacts but consisting from one piece with the required functionalities.
**3D Shape:** In one embodiment, the inventive material is characterized by its 3 dimensional shape; thereby distinguishing from 2 dimensional ("flat", "sheet like") materials. The inventive material is essentially free of assembly artefacts, such as seams, cuts, bonding or similar.

In one embodiment the final shape of the membrane is congruent with the final product independently of the initial shape of the product, be it 2 dimensional or 3 dimensional. This embodiment is advantageous for jackets and outdoor clothing, house wraps in construction (to manage water and steam in buildings), packaging materials (e.g. for food, consumer goods and pharmaceuticals), and sensors.

In one further embodiment the coverage of herein described membrane is not on all parts of the garment but on specific areas of the garment to provide localized function. As described above this also requires no seams, cuts, bondings or similar assembly artefacts. This is advantageous for assembly, performance and also optics. Covered parts can be modified without an increase in special cutting and assembly as currently required for localized performance.

**Polymers:** As outlined above, a wide variety of polymers may be used for the inventive membranes. In one embodiment, the polymer is selected from the group consisting of polymers soluble in organic solvents and cross-linked polymers thereof. This is considered advantageous, as the presently known polymer membranes are limited in view of the materials suitable and / or the characteristics of their pores. Suitable polymers may be selected from the group of polymers soluble in organic solvents. Further, suitable polymers may be selected from the group of polymers soluble in organic solvents and include polyurethanes, ethyl-vinylacetates, polycarbonates, artificial rubbers, polyesters, polyether, polyaryletherketones, polyamides, polyacrylates, polyarylates, polystyrenes, cyclo-olefin-copolymers, polyolefins and crosslinkable polymers such as natural and artificial rubbers, polysiloxanes and epoxide resins.

Advantageously, such polymers are free of halogens, particularly free of fluorine. This is considered advantageous, as the membranes are environmentally benign. Advantageously, such polymers are circular in nature by flowing back into a recycling stream or being biodegradable in nature.
Advantageously, soft polymers are the basis for membranes that provide the haptic, optical and mechanical properties needed for membranes to be used in clothing. It is also possible to increase the number of layers even with different types of polymers to combine the properties of each layer.

In a further embodiment, the seamless membrane has the following characteristics:
**Pores:** As outlined above, the inventive material is porous. The inventive material is characterized by its 3 dimensional shape free of seams, cuts, bonding or similar assembly artefacts and by the size, type and amount of pores present. The size and type and amount of pores may be influenced by the type of coating, the amount of coating material, starting materials, the ratio of particles: polymer, the manufacturing process, the type of coating material.
**Size:** The size of the pores of the inventive membranes (defined by the diameter of the coated particles; 5 - 15'000 nm, preferably 2000-8000 nm). The size of the pores may be determined by microscopy. Further, the pore size distribution may be precisely adjusted, due to the starting materials used.
**Amount:** The porosity, i.e. the volume of pores in relation to the volume of the membrane in total, may be varied in a broad range. Inventive materials show porosity in the range of 30-80 vol-%, preferably 55 -65 vol-%. The porosity may be determined by micrograph analysis.
**Type:** The pores of the material may be arranged in a way that the material is permeable, partly permeable or impermeable. If essentially all pores of the material have dead ends, the material is impermeable. On the contrary, if essentially all pores of the material have open ends, the material is considered permeable. Consequently, if a fraction of the pores has dead ends, the material is considered partly permeable. In an advantageous embodiment, the present invention provides polymer membranes, wherein at least 50 %, preferably at least 80 % of said pores are interconnected.
**Thickness:** The thickness of the inventive membranes may be varied over a broad range, such as from 0.01 - 1000 µm. In case the inventive membrane is present in the form of a mono-layer, a suitable thickness is in the range of 0.01-500 µm; preferably 1-120 µm most preferably 15 - 50 µm. In case the inventive membrane is present in the form of a multi-layer structure, a suitable thickness is in the range of 1-1000 µm; preferably 30-250 µm. Such membranes may also be termed "sheet material" or "porous foils"; these terms indicate that the material has a length and width which is at least one magnitude larger (preferably at least two magnitudes larger) than the thickness of the material.
**Waterproofing** (measured as WC and contact angle) and **breathability** (measured as WVTR) of the inventive membranes is discussed above, **first aspect** of the invention.
**Mechanical properties** of the inventive membranes, like tensile strength, flexibility are suitable for many applications, such as in textile applications.

The possible production of silicon free membranes are further of considerable interest in OEM manufacturing lines, as silicon is considered a risk in all industries that rely on painting and gluing and where a final coating is applied on the goods (e.g. automotive body paint shop; silicone causes defects in the outer paint finish).

**Layers:** In one embodiment, the inventive membrane consists of one single layer. This embodiment is advantageous for jackets and outdoor clothing, house wraps in construction (to manage water and steam in buildings), packaging materials (e.g. for food, consumer goods and pharmaceuticals) and sensors.

In one further embodiment, the inventive membrane consists of two or more layers, such as 2 or 3 or up to 20 layers. This embodiment is advantageous for outdoor clothing (thereby providing enhanced comfort due to better sweat management, particularly by transporting sweat inside the jacket layer from ill-accessible to more accessible area of the clothing), cooling textiles (i.e. materials that provide a cooling effect to the user through evaporation of water from the multi-layer material), packaging of living organisms, packaging of food, pharmaceuticals and sensitive consumer goods, cooling curtains (allowing passive cooling in and around buildings and public transport), humidification of air in air acclimatization units. Further applications are in flexible gas absorbers, air cleaning devices, personal hygiene and personal protection equipment.

In general terms, the present invention relates in a **fourth aspect** to the specific use of the 3D microporous membrane in textile applications and to textile products comprising the inventive 3D polymer membrane, thus providing performance to clothing products.

In general, the inventive textile products retain the beneficial properties of the 3D polymer membranes, particularly being waterproof and being breathable, and are thus suitable for all uses that are applicable to such membranes; this particularly includes the uses as disclosed herein, e.g. in a textile material.

### i. Direct application on 2D-textile

In a further embodiment, simple 2D textile can be directly coated with a functional membrane without the use of glue/lamination. Those textiles can be selected from the group of woven, non-woven or knitted fabrics, e.g. with a specific pattern which is typically difficult for lamination.

### ii. Direct application on 3D-textile (finished textile product)

In a further embodiment, the functional garment containing a seamless membrane is particularly selected from the group of clothing (such as coats, jackets, trousers, underwear), containers (such as bags, backpacks) and others (such as gloves, hats and shoes). Those garments are made out of textiles that can be selected from the group of woven, non-woven or knitted fabrics. The 3D membrane is sprayed, dip-coated or painted directly on the finished textile product, covering also the seams.

Those substrates are considered "flexible" substrates and more details on 3D application on a flexible substrate can be found below:

### 1. direct application on a flexible finished textile product

The finished textile product (for example a jacket) is placed on a heating inflatable support. Using spraying, dipping, or painting, the substrate is covered with the most homogeneous layer possible before proceeding to step (c). It is also possible to apply an additional layer of dispersion on strategic areas of the substrate to enhance performances and/or stability and resistance of the resulting membrane.

### 2. free-standing membrane transferred on flexible finished textile product

Another technique to coat a flexible substrate is to first apply the dispersion of step (a) on a rigid object following the previous procedure described in step (g) resulting in a free standing membrane (4), then cover the same object/mannequin with the flexible substrate and soak this substrate with the solvent (7) of the dispersion. The soaking of the substrate can be made by spraying the solvent on the substrate and makes the inner side of the flexible substrate stick to the shaped dispersion without the use of adhesive.

In specific embodiments the method of direct or/and transferred application of the membrane on the finished textile product can be applied to a sport garment; e.g. a jacket and/or trousers, a shoe and/or sock, a glove.

### iii. Seamless self-supporting membrane

In a further embodiment, the 3D membrane is self supporting and connected with said textile membrane by gluing, welding. These structures work for 3D shapes in general but especially for:

### a. glove

In a further embodiment, the functional garment containing a 3D-shaped, seamless, self-supporting structured membrane is a glove. The 3D shaped membrane is attached in the middle of an outer (oversized) and inner (undersized) tailored textile in the form of a glove, for example but not limited to, by specific points of glue applied 3-dimensionally.

### b. sock

In a further embodiment, the functional garment containing a 3D-shaped, seamless, self-supporting structured membrane is a sock. The 3D shaped membrane is attached in the middle of an outer (oversized) and inner (undersized) tailored textile in the form of a sock, for example but not limited to, by specific points of glue applied 3-dimensionally.

### iv. Body-mapping

In a further embodiment, the 3D membrane can be applied on pre-determined positions; e.g. by body-mapping for performance control. Optionally, color (dyes) can be added to the design and fit the different performance areas. Additionally, the membrane can cover all of the surface of the garment or only selected parts of it.

Further, the present invention will be better understood by reference to **fig 1****.** This figure outlines the invention as described herein, specifically process steps of the manufacturing process of 3D waterproof and breathable membrane, here illustrated as a sock. Steps (a) to (g) and Materials (1) to (10) are described in the specification and claims.

The invention is further illustrated by the following, nonlimiting **Examples**

### I. Synthesis

Polymer mixture of commercially available polymer(s) was obtained by dissolving it/them in a solvent using an external stirrer (IKA^{®}RW 20 digital) . The coated or non-coated particles were added to the mixture and the resulting dissolution was run through a ball mill once (WAB Dyno^{®}-Mill Multi Lab at 10 rpm pumping rate and 3800 U/min milling rotation with 1 mm Zr0₂ milling beads) to receive the final polymer solution.

### I.1 Example 1: Ether-based Polyurethane & CaCO3:

600 kg of dispersion (1) were synthetized by dissolving 2 different ether-based polyurethanes in N,N-dimethylacetamide. Specially coated-CaCO3 particles were added to the mixture and the dispersion was milled until the required particle size was achieved. The final dispersion is to be degassed in vacuum.

### I.2 Example 2: Ether-based Polyurethane & NaCl:

2 kg of dispersion (1) were synthetized by dissolving 2 different ether-based polyurethanes in N,N-dimethylacetamide. NaCl particles were added to the mixture and the dispersion was milled until the required particle size was achieved. The final dispersion is to be degassed in vacuum.

### I.3 Example 3: Water-based Polyurethane & CaCO3:

0.5 kg of dispersion (1) were synthetized by using commercially available water-based PU (as liquid dispersion). Specially coated CaCO3 particles were added to the mixture and the dispersion was milled until the required particle size was achieved. The final dispersion is to be degassed in vacuum.

### I.4 Example 4: Poly lactic acid (PLA):

2 kg of dispersion (1) were synthesized by dissolving PLA in tetrahydrofuran (THF). Specially coated-CaC03 particles were added to the mixture and the dispersion was milled until the required particle size was achieved. The final dispersion is to be degassed in vacuum.

### II. Application

After the synthesis of the dispersion (1) described in I, the liquid membrane is then sprayed, dip-coated or painted onto a substrate (described above).

### II.1 Spraying

General procedure: The substrate (2.2) was placed on a support and the area of spray delimited using paper tape. It was then preheated in a 110°C oven for more than 5 minutes. Few tens of milliliters of room temperature liquid membrane dispersion (1) were added in a spray gun tank. The spray gun was connected to an air flow whose pressure can be controlled. The pressure was set to 2.5 bars when the gun trigger was fully engaged. The hot substrate (2.2) has then been removed from the oven and the liquid membrane dispersion (1) sprayed onto it to fully cover the desired area. The distance from the gun nozzle with the substrate (2.2) can vary from 5 to 25 cm and the speed of advancement of the gun from 5 to 500 mm/s. After a first monolayer of sprayed liquid membrane (2.1) was applied, the coated support (2) was placed again in the 110°C oven in order for the solvent to be completely evaporated. Then the dried coated support (3) was removed from the oven and a second layer was applied using the same procedure. This step can be repeated several times until the desired membrane thickness is reached. The dried membrane on the substrate (3), was then placed in a bath to wash out the template particles (6), in the case the dried non-porous film (3.1) is not easily removed from the substrate (3.2). This bath can be acidic depending on the particles (6) used.
Depending on the final application of the product, the 3D membrane is then removed from the substrate (step e)) after the washing step d), as described in more details below:
**On a mannequin** (free-standing membrane): Tests were made with shoe and glove mannequins. The spraying parameters of distance to the sample and speed were rather close (from 5 to 15 cm) and fast (from 250 to 500 mm/s) . The spray pattern made by hand looked homogeneous with an even thickness of the membrane on the whole sample including 3D corners (+/-5 microns). The resulting samples after following the rest of the general procedure were gently removed from the mannequin, giving a free-standing shaped membrane in one piece.
**On 2D textile:** The tests on textile were performed with different types of fabric, e.g. polyester, cotton, polyamide, polypropylene. The procedure was adapted to the behavior of the fabric regarding its thickness, weaving or liquid membrane absorption for instance. The textile was fixed onto a 2D support plate and pre-heated before the spraying process. During this phase, the support was maintained vertically. The distance and speed parameters were rather far (around 15 to 20 cm) and slow (around 5 to 10 mm/s). The spraying pattern was more vertical and horizontal lines to cover all of the surface. The rest of the general procedure was followed.
**on a finished textile product** (incl. seam): Two techniques were experimented to achieve a membrane cover of a finished textile product including seams:
   i) Using the same technique as a 2D spraying on fabric by heating up in advance the sample. For bigger samples that do not fit inside the oven, a heating blow up support structure was used, allowing to spray and dry at the same time.
   ii) Spray first on a mannequin as described in the previous part and thread the sample over the membrane still on its support. Then, spraying some solvent above the fabric sample to soak it with an air flow pressure around 1 bar and replace the sample in a 110°C oven to dry the solvent out. The rest of the general procedure was followed. This was used, for example, as a transfer possibility of the seamless membrane on a finished textile-based sock.

### II.2 Dipping

**General procedure:** The substrate (2.2) was placed on a support and the area of dipping delimited using paper tape. The dipping tests were carried out without pre-heating (note that pre-heating the substrate would also work). The liquid membrane dispersion (1) is kept at room temperature. The substrate (2.2) was immersed in the liquid membrane and then dried out at 110°C in an oven. This step can be repeated several times until the desired membrane thickness is reached. The dried coated object (3) was placed in a bath to wash out the template particles (6), in the case the dried non-porous film (3.1) is not easily removed from the substrate (3.2). This bath can be acidic depending on the particles (6) used.
Depending on the final application of the product, the 3D membrane is then removed from the substrate (step (g)) after the washing step (f), as described in more details below:
**on a mannequin** (free-standing membrane): The hand and shoe mannequins were soaked in a bucket of liquid membrane dispersion (1) then taken out and stayed above the bucket for a while so that the excess flowed back into the bucket before placing it in the oven at 110 ° C. The thickness of the sample was not constant on all of the shape as the liquid membrane accumulates in the lower parts due to gravity. This can be avoided by moving the sample while it is dried. The rest of the general procedure was followed.
**on a finished textile product** (incl. seam): The finished textile product was placed in a container and liquid membrane dispersion (1) was poured over all the desired parts.

Then the coated object (2) was taken out and stayed above the container for a while so that the excess of membrane flowed back into the container before placing it in the oven at 110 ° C. For example, around 200 mL of liquid membrane was required for a complete man-size sock. The rest of the general procedure was followed.

### II.3 Painting

**General procedure:** The substrate (2.2) was placed on a support and the area of paint delimited using paper tape. The painting tests were carried out without pre-heating (note that pre-heating the substrate would also work). A paint brush was soaked in a liquid membrane dispersion (1) tank and a layer was applied on the sample by brushing it. After this layer of paint liquid membrane, the coated object (2) was placed in the 110°C oven. Then the sample was removed from the oven and a second layer was applied using the same procedure. This step can be repeated several times until the desired membrane thickness is reached. The dried coated object (3) was placed in a bath to wash out the template particles (6), in the case the dried non-porous film (3.1) is not easily removed from the substrate (3.2). This bath can be acidic depending on the particles (6) used.
Depending on the final application of the product, the 3D membrane is then removed from the substrate (step (g)) after the washing step (f), as described in more details below:
**on 2D textile:** The liquid membrane was applied following a direction with the brush for one layer to avoid traces of brush as much as possible. Visual traces are still noticeable after passing through the oven. A second layer was applied following the perpendicular direction and the coated sample (2) was placed again in the oven at 110°C. The rest of the general procedure was followed.
**on a finished textile product** (incl. seam): A similar procedure was applied as for 2D textile. The seams of a jacket, for example, were painted with the liquid membrane dispersion (1) following the direction of the seam but also perpendicular to it for a homogeneous coverage. A second layer was applied following using the same directions and the coated object (2) was placed again in the oven at 110°C. The rest of the general procedure was followed.

### III. Analytics:

The obtained products described above were destroyed to enable the measurements of the following analytics.

**Table 1: Performance results of the different methods based on Example 1.**

| Techniques | WC (m) | WVTR (g/m²/day) |
|---|---|---|
| spraying free-standing membrane | 9.7 | 1516 |
| | 8.7 | 1672 |
| | 18.5 | 632 |
| spraying on textile | 6.1 | 860 |
| | 14.9 | 779 |
| | 13.1 | 1004 |
| | 7.1 | 1092 |
| | 9.9 | 1212 |
| dipping free-standing membrane | -* | -* |
| dipping on textile | 9.3 | 1456 |
| painting on textile | 12.9 | 421 |

| | | |
|---|---|---|
| * not determined. The results of the free-standing membrane by dipping are assumed to be similar for the sprayed techniques as the same liquid membrane dispersion (1) was used. | | |

**Table 2: Performance results of the spraying methods based on Example 2, 3 and 4**

| Techniques | Ex. # | WC (m) | WVTR (g/m2/day) |
|---|---|---|---|
| spraying free-standing membrane | 2 | 12.5 | 1048 |
| | 3 | 40 | 612 |
| | 4 | 25 | 926 |

## Claims

1. A method of manufacturing a polymer membrane;
said membrane
• is 3 - dimensional and seamless;
• is either a membrane (3.1) attached to a substrate (2.2), or is a free-standing membrane (4);
• is porous and having a pore size of 5-10'000 nm, preferably 100 - 5000 nm, most preferably 300-1000 nm,
said method comprising the steps of:
a. providing a dispersion (1) comprising
• one or more diluents (7) in an amount of at least 40wt.%,
• one or more polymers (5) dissolved therein,
• one or more coated or non-coated particles (6, 6', 6") dispersed therein,
• optionally one or more additives (8) dissolved therein,
• optionally one or more dyes (9) dispersed therein,
and whereby the coated particles (6')
• are pre-manufactured
• are selected from the group consisting of organic salts, metal salts, metal oxides and combinations thereof, or organic crystals,
• the coating material of said coated particles is selected from the group of poly maleic anhydrides, carboxylic acids, aryl-alkoxy-silanes alkyl-aryl-alkoxy-silanes and alkyl-alkoxy-silanes, and
• have a particle size in the range of 5 - 15'000 nm, preferably 2000-8000 nm,
and whereby the non-coated particles (6")
• are selected from the group consisting of organic salts, metal salts, metal oxides and combinations thereof, or organic crystals,
• have a particle size in the range of 5 - 15'000 nm, preferably 2000-8000 nm;
b. coating a 3-dimensional substrate (2.2) with said dispersion (1), thus obtaining a layer (2.1) partly or fully covering said substrate (2.2);
c. subjecting the obtained material (2) to a drying step, thus obtaining a dried material (3);
d. optionally repeating steps (b) and (c), thus obtaining a multi-coated material (3');
e. optionally subjecting the thus obtained material to a polymerisation or cross-linking step;
f. removing said one or more particles (6, 6', 6") by a dissolution step thus obtaining a membrane (3.1) attached to a substrate (2.2); and
g. optionally removing the obtained polymer porous membrane (3.1) from said supporting material (2.2) without destruction of the 3-dimensional shape, thus obtaining a free-standing 3D membrane (4).

2. The method of claim 1, **characterized in that**
• said method does not involve a "closing step" which is detectable in a textile product or alters the polymer membrane; said closing step particularly selected from bonding, sewing, welding, gluing, knitting, stitching; and/or
• said method does not involve a phase separation step; and/or
• said application method does not involve a 2-dimensional pore forming step before assembly into 3-dimensional product; and /or
• said application creates the pores (step (f)) after application of the liquid membrane precursor (step (b)) into the final shape; and/or
• said coating step (b) is selected from the group consisting of spraying, painting, printing (including 3D printing), and dip-coating; and/or
• said dissolution (f) is performed in 90 min or less.

3. The method of claim 1, where the polymer membrane covers the outer or inner surface of a clothing (2.2), either fully or on predetermined areas.

4. The method according to claim 1 or 2, **characterized in that**
• said metal salts are selected from the group consisting of carbonates, hydrogencarbonates, sulphates, halogenides, nitrates and phosphates and said metal oxides are selected from ZnO and MgO; and / or
• said organic crystals are selected from a group consisting of saccharides, preferably glucose, fructose or a combination of both; and/or
• said coating material is selected from the group of natural fatty acids, anhydride acids, such as poly maleic anhydride acids (PMAH), its homopolymer but also co-polymer containing PMAH) and mixture of PMAH, or carboxylic acids, particularly stearic acid; and / or
• said diluents are selected from the group consisting of solvents with a b.p. below 200°C; and / or
• said polymers are selected from the group of soluble polymers, pre-polymers that can be polymerized and pre-polymers that can be cross-linked; and / or
• said supporting material, called substrate, is selected from the group consisting of polymers, metals, leather, ceramics, concrete and paper, each coated or uncoated.
• Said 3-dimensional substrate, has the shape of (i) a clothing, such as a hand, feet, torso, leg, head or any types of clothing in general, (ii) any type of shaped leather object, such as ..., (iii) a special electronic parts, furniture, construction, such as ....

5. The method according to any of the preceding claims, **characterized in that** said soluble polymers / pre-polymers that can be polymerized / prepolymer that can be cross-linked are selected from the group consisting of polysulfones, polyethersulfones, polycarbonates, polystyrenes, polyacrylates, polysiloxanes, polyarylates, polyurethanes, ethylvinylacetates, artificial and natural rubbers, polyesters, polyether, polyaryletherketones, polyamides, polyacrylates, polyarylates, cyclo-olefin-copolymers and polyolefins.

6. The method according to any of the preceding claims, wherein said polymer membrane:
• has a thickness of 0.01 - 1000 microns preferably 1 - 120 microns, most preferably 15-50 microns; and/or
• has a porosity of 30-80%, preferably 55-65%; and/or
• has a poremouth size of 5-10'000 nm, preferably 100 - 5000, most preferably 300-1000 nm; and/or
• has a water column (WC) of at least 4.8m; and/or
• has a water vapour transmission rate (WVTR) of at least 500 g/m2 per day; and/or
• has a water contact angle of at least 50°.
• is built up of 1 - 20 layers, preferably 1-4.

7. The method according to any of the preceding claims, wherein said dispersion contains:
• from 40 to 99 wt.-% diluents (7);
• from 1 to 20 wt.-% polymers (5);
• from 0.5 to 40 wt.-% coated and/or uncoated particles (6) ;
• from 0-6, preferably 2-4, wt.-% coating material;
• from 0 to 5 wt.-% additives (8);
• from 0 to 5 wt.-% dyes (9).

8. A porous polymer membrane (3), (4) **characterized in that**
said membrane is obtainable by, or obtained by, a method according to any of claims 1 to 7 and / or
said membrane
• has a 3 dimensional shape, and
• its final shape is congruent with the final product, and
• has a single piece structure without visible assembly artefacts; and
• optionally complies with one or more of the following attributes:
• a thickness has a thickness of 0.01 - 1000 microns, preferably 1 - 120 microns, most preferably 15-50 microns; and/or
• a poremouth size of 5-10'000 nm, preferable 100 - 5000, most preferably 300-1000 nm; and/or
• a porosity of 30-80%, preferably 55-65%; and/or
• a water column (WC) of at least 4.8m; and/or
• a water vapour transmission rate (WVTR) of at least 500 g/m2 per day.

9. A woven, non-woven or knitted textile material comprising a polymer membrane according to claim 8, **characterized in that**
• said membrane is directly coated on said 2D textile with specific pattern, or
• said membrane is directly coated or transferred on said 3D textile, i.e. finished textile product, or
• said membrane is self-supporting and connected with said textile membrane by gluing or welding;
• said membrane being applied on pre-determined positions; e.g. by body-mapping for performance control.

10. A finished textile product, particularly selected from the group of clothing, containers and shoes, said textile product comprising
• a textile material according to claim 9, or
• a polymer membrane according to claim 8.

11. A finished textile product according to claim 10, where
the textile product is selected from clothing, particularly selected from coats, jackets, trousers, shirts, gloves, socks, shoes, caps; and
the membrane
• being seamless over the whole or parts of the surface of said clothing and
• having a pore size of 5 - 10'000 nm and optionally
• having a one or more of a thickness of 0.01 - 1000 microns, and/or a breathability of above 500 g/m² per day and/or a water column of above 4.8 m.

12. A sport shoe comprising the functional 3D-shaped, seamless membrane as defined in claim 11; wherein said membrane:
• was added by spraying, dipping, painting, thus covering the seam in a mid-layer, outer layer or inside layer of the finished garment; or
• is self-supported and connected with said shoe by gluing, welding or transferring on a mid-layer, outer layer or inside layer of the finished garment; and / or
• covers all of the surface of the sport shoe or only selected parts of it.

13. A sport garment, particularly selected from jackets, trousers, and gloves, comprising the functional 3D-shaped, seamless membrane as defined in claim 11, said membrane
• was added by spraying, dipping, painting, thus covering the seam in a mid-layer, outer layer or inside layer of the finished garment.
• is self-supported and connected with said shoe by gluing, welding or transferring on a mid-layer, outer layer or inside layer of the finished garment.
• covers all of the surface of the garment or only selected parts of it.

14. Use of a dispersion (1), as defined in claim 1, 4 or 5, for manufacturing
• a 3-dimensional, seamless, porous polymer membrane, or
• a textile material, or
• a textile product.
